# EUROPÄISCHE PATENTANMELDUNG

(11) **EP 3 671 284 A1**
(43) Veröffentlichungstag der Anmeldung: **24.06.2020**
(21) Anmeldenummer: 19211450.2
(22) Anmeldetag: 26.11.2019
(51) Int. Cl.: G01T 1/18

(54) **VERFAHREN ZUM BETREIBEN EINES RADIOMETRISCHEN MESSGERÄTS UND RADIOMETRISCHES MESSGERÄT**

(30) Priorität: 21.12.2018 DE 102018222811
(71) Anmelder: Berthold Technologies GmbH & Co. KG, 75323 Bad Wildbad (DE)
(72) Erfinder: Berthold, Fritz, 75173 Pforzheim (DE); Freiburger, Ewald, 75245 Neulingen (DE)
(74) Vertreter: Patentanwälte Ruff, Wilhelm, Beier, Dauster & Partner mbB

(57) **Zusammenfassung**

Verfahren zum Betreiben eines radiometrischen Messgeräts,
- wobei das radiometrische Messgerät ein Zählrohr mit einer Anode und einer Kathode aufweist, und
- wobei das radiometrische Messgerät dazu ausgebildet ist, abhängig von Eigenschaften von ionisierender Strahlung, die auf das Zählrohr trifft, eine Messgröße zu bestimmen,
wobei das Verfahren die Schritte aufweist,
- in einer ersten Messart (M1),
- Einstellen einer konstanten ersten Spannung (UHV) zwischen Anode und Kathode derart, dass das Zählrohr als Proportionalzählrohr arbeitet, und
- Bestimmen der Messgröße in Abhängigkeit von einem zwischen Anode und Kathode fließenden Strom (im),

- in einer zweiten Messart (M2),
- Regeln des zwischen Anode und Kathode fließenden Stroms (im) auf einen Stromsollwert, wobei als Stellgröße der Stromregelung die Spannung (UHV) zwischen Anode und Kathode dient, und
- Bestimmen der Messgröße in Abhängigkeit von der Spannung (UHV) zwischen Anode und Kathode, und

- in einer dritten Messart (M3),
- Einstellen einer konstanten zweiten Spannung (UHV) zwischen Anode und Kathode derart, dass das Zählrohr als Ionisationskammer arbeitet, und
- Bestimmen der Messgröße in Abhängigkeit von dem zwischen Anode und Kathode fließenden Strom (im), und

- Aktivieren entweder der ersten Messart (M1), der zweiten Messart (M2) oder der dritten Messart (M3) in Abhängigkeit von dem zwischen Anode und Kathode fließenden Strom (im) und/oder in Abhängigkeit von der Spannung (UHV) zwischen Anode und Kathode.

## Beschreibung

Verfahren zum Betreiben eines radiometrischen Messgeräts und radiometrisches Messgerät.

Die Erfindung betrifft ein Verfahren zum Betreiben eines radiometrischen Messgeräts und ein radiometrisches Messgerät.

Der Erfindung liegt die Aufgabe zugrunde, ein Verfahren zum Betreiben eines radiometrischen Messgeräts und ein radiometrisches Messgerät zur Verfügung zu stellen, die eine einfache und zuverlässige Erfassung einer Messgröße ermöglichen.

Der Erfindung löst diese Aufgabe durch ein Verfahren zum Betreiben eines radiometrischen Messgeräts nach Anspruch 1 und ein radiometrisches Messgerät nach Anspruch 7.

Das erfindungsgemäße Verfahren dient zum Betreiben eines radiometrischen Messgeräts, wobei das radiometrische Messgerät ein herkömmliches Zählrohr mit einer Anode und einer Kathode aufweist.

Das radiometrische Messgerät ist dazu ausgebildet, abhängig von Eigenschaften von ionisierender Strahlung, die auf das Zählrohr trifft, beispielsweise abhängig von der Intensität der ionisierenden Strahlung, eine Messgröße zu bestimmen. Hinsichtlich dieser grundsätzlichen Funktionen sei auch auf die einschlägige Fachliteratur verwiesen.

Das Verfahren weist folgende Schritte auf.

In einer ersten Messart wird eine konstante erste Spannung zwischen Anode und Kathode derart eingestellt, dass das Zählrohr als Proportionalzählrohr arbeitet. Dies wird auch als Betrieb des Zählrohrs mit Gasverstärkung bezeichnet. In der ersten Messart wird die Messgröße in Abhängigkeit von einem zwischen Anode und Kathode fließenden Strom ermittelt. Im Übrigen sei hinsichtlich der Messart des Zählrohrs als Proportionalzählrohr auf die einschlägige Fachliteratur verwiesen. Die erste Spannung kann beispielsweise in einem Spannungsbereich zwischen 1000 V und 2000 V liegen.

In einer zweiten Messart wird der zwischen Anode und Kathode fließende Strom auf einen vorgebbaren Stromsollwert geregelt, wobei als Stellgröße der Stromregelung die Spannung zwischen Anode und Kathode dient. Mit anderen Worten wird die Spannung zwischen Anode und Kathode derart eingestellt, dass der zwischen Anode und Kathode fließende Strom dem vorgebbaren Stromsollwert entspricht. Die Messgröße wird in der zweiten Messart in Abhängigkeit von der Spannung zwischen Anode und Kathode ermittelt. Der Stromsollwert liegt typisch im Pikoampere-Bereich.

In einer dritten Messart wird eine konstante zweite, von der ersten Spannung verschiedene Spannung zwischen Anode und Kathode derart angelegt, dass das Zählrohr als Ionisationskammer arbeitet. Die Messgröße wird in der dritten Messart in Abhängigkeit von dem zwischen Anode und Kathode fließenden Strom ermittelt. Hinsichtlich der grundlegenden Eigenschaften der Messart als Ionisationskammer sei auf die einschlägige Fachliteratur verwiesen. Die zweite Spannung kann beispielsweise in einem Spannungsbereich zwischen 300 V und 500 V liegen.

Erfindungsgemäß wird entweder die erste Messart, oder die zweite Messart oder die dritte Messart in Abhängigkeit von dem zwischen Anode und Kathode fließenden Strom und/oder in Abhängigkeit von der Spannung zwischen Anode und Kathode eingestellt bzw. aktiviert.

Gemäß einer Ausführungsform arbeitet das Zählrohr in der zweiten Messart als Proportionalzählrohr, d.h. die Spannung zwischen Anode und Kathode wird innerhalb eines Spannungsbereichs variiert, der das Zählrohr als Proportionalzählrohr wirken lässt.

Gemäß einer Ausführungsform wird ausgehend von der aktiven ersten Messart die zweite Messart aktiviert, sobald der zwischen Anode und Kathode fließende Strom einen Stromschwellenwert überschreitet. Der Stromschwellenwert liegt typisch im Pikoampere-Bereich und kann vom Zählrohrdesign abhängen.

Gemäß einer Ausführungsform wird der Stromsollwert basierend auf dem Stromschwellenwert gewählt. Insbesondere werden der Stromsollwert und der Stromschwellenwert identisch gewählt.

Gemäß einer Ausführungsform wird ausgehend von der aktivierten zweiten Messart die dritte Messart aktiviert, sobald die Spannung zwischen Anode und Kathode einen Spannungsschwellenwert unterschreitet. Der Spannungsschwellenwert kann beispielsweise in einem Spannungsbereich zwischen 1000 V und 1500 V liegen und kann von Zählrohrparametern abhängen, wie beispielsweise dem verwendeten Gas, dem Fülldruck, usw.

Gemäß einer Ausführungsform ist die Messgröße eine Dosisleistung.

Das erfindungsgemäße radiometrische Messgerät weist ein herkömmliches Zählrohr mit einer Anode und einer Kathode auf.

Das radiometrische Messgerät weist weiter eine ansteuerbare Spannungserzeugungseinheit auf, die dazu ausgebildet ist, ansteuerungsabhängig eine einstellbare Spannung zwischen Anode und Kathode zu erzeugen.

Das radiometrische Messgerät weist weiter eine Steuereinheit auf, beispielsweise in Form eines Mikroprozessors, die bzw. der dazu ausgebildet ist, die Spannungserzeugungseinheit anzusteuern, einen zwischen Anode und Kathode fließenden Strom zu erfassen und die zwischen Anode und Kathode anstehende Spannung zu erfassen. Die Steuereinheit ist weiter dazu ausgebildet, das radiometrische Messgerät derart anzusteuern, dass ein oben beschriebenes Verfahren ausgeführt wird.

In der zweiten Messart kann bei bekannter Zählrohrkennlinie der zwischen Anode und Kathode fließende Strom konstant gehalten werden. Diese Konstanthaltung wird beispielsweise mittels einer Regelschleife durchgeführt, die über die Nachführung der Gasverstärkung durch Veränderung der angelegten (Hoch-) Spannung zwischen Anode und Kathode erfolgt. Der Wert der angelegten Spannung bei konstantem Strom wird damit das auszuwertende Messsignal für die Messgröße, beispielsweise Strahlungsintensität.

Die Nachführung der Spannung kann mit einer ausreichend kurzen Zeitkonstante erfolgen, beispielsweise ca. 1 Sekunde.

Eine Kalibrierung des radiometrischen Messgeräts in der zweiten Messart, d.h. bei vorgegebenem Stromsollwert, kann beispielsweise in definierter geometrischer Lage des Zählrohrs mittels eines Kalibrierstrahlers mit bekannter Strahlungsintensität erfolgen.

Ohne oder bei sehr kleiner Strahlungsintensität kann der Strom nicht mehr auf den Stromsollwert geregelt werden, denn die Spannung als Stellgröße würde unzulässig hohe Werte annehmen und den Bereich der beschränkten Proportionalität erreichen, was vermieden werden sollte. In diesem Fall wird daher die Spannung nicht weiter erhöht und die Messgröße wieder basierend auf dem veränderlichen Strom ermittelt.

Es ergeben sich dadurch drei Messarten bzw. Messbereiche:
- Messart 1: Konstantspannungsbereich bei sehr kleinen Strahlungsintensitäten bzw. ohne Strahlungsintensität.
- Messart 2: Konstantstrombereich bei Strahlungsintensitäten gleich oder grösser einer vorbekannten Kalibrierintensität.
- Messart 3: Konstantspannungsbereich auf dem lonisationskammerplateau ohne Gasverstärkung bei sehr hohen Intensitäten.

Diese drei Messarten bzw. Messbereiche können stetig ineinander übergehen. Gegebenenfalls kann eine Hysterese zwischen den Übergängen vorgesehen sein. Der Anschluss des Konstantstrombereichs an den lonisationskammerbereich kann gegebenenfalls über eine Variation einer elektronischen Verstärkung angepasst werden.

Die Messung von Strom und Spannung kann zyklisch mittels eines AD-Wandlers erfolgen, wobei die gewandelten Werte beispielsweise in einem Mikrocontroller ausgewertet werden.

Mittels der erfindungsgemäßen Messarten-Umschaltung können beispielsweise Rekombinationseffekte und Sättigungseffekte im Zählrohr klein gehalten werden. Weiter kann das im Zählrohr verwendete Zählgas vor zu schnellem "Verbrauch" geschützt werden.

Die Erfindung wird nachfolgend unter Bezugnahme auf die Zeichnungen detailliert beschrieben. Hierbei zeigt:
- Fig. 1: schematisch ein radiometrisches Messgerät und
- Fig. 2: schematisch eine Verstärkung in Abhängigkeit von einer Spannung und einem Strom in logarithmischer Darstellung.

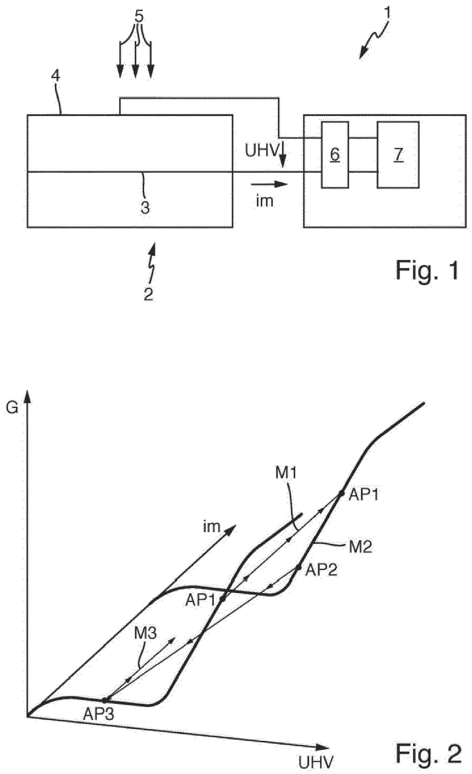

Fig. 1 zeigt ein radiometrisches Messgerät 1 mit einem Zählrohr 2. Das Zählrohr 2 weist herkömmlich eine Anode 3 und eine Kathode 4 auf.

Das radiometrische Messgerät 1 weist weiter eine ansteuerbare Spannungserzeugungseinheit 6 auf, die dazu ausgebildet ist, eine einstellbare (Hoch-) Spannung UHV zwischen Anode 3 und Kathode 4 zu erzeugen. Insoweit sei auch auf die einschlägige Fachliteratur verwiesen.

Das radiometrische Messgerät 1 weist weiter eine Steuereinheit 7 auf, die dazu ausgebildet ist, die Spannungserzeugungseinheit 6 zur Erzeugung einer gewünschten Spannung UHV anzusteuern, einen zwischen Anode 3 und Kathode 4 fließenden Strom im und die erzeugte Spannung UHV zu erfassen.

Das radiometrische Messgerät 1 ist dazu ausgebildet, abhängig von Eigenschaften von ionisierender Strahlung 5, die auf das Zählrohr 2 trifft, eine Messgröße, beispielsweise in Form einer Dosisleistung, zu bestimmen. Bei den Eigenschaften der ionisierenden Strahlung 5 kann es sich um die Intensität der ionisierenden Strahlung 5 handeln.

Das mittels des radiometrischen Messgeräts 1 ausgeführte Messverfahren wird unter Bezugnahme auf Fig. 2 näher erläutert.

Fig. 2 zeigt in einem dreidimensionalen Koordinatensystem schematisch eine Verstärkung G (logarithmisch aufgetragen) in Abhängigkeit von der (Zählrohr-) Spannung UHV und dem (Zählrohr-) Strom im.

In Fig. 2 ist exemplarisch die erfindungsgemäße dosisleistungsabhängige Trajektorie bzw. Bahn auf der Verstärkungskennlinie gezeigt, beginnend bei kleiner Dosisleistung im Arbeitspunkt AP1 links in Richtung zunehmender Dosisleistungen im Arbeitspunkt AP1 rechts, dann bei weiter zunehmender Dosisleistung in Richtung Arbeitspunkt AP2, dann bei noch weiter zunehmender Dosisleistung in Richtung AP3 und schließlich bei noch weiter zunehmender Dosisleistung vom Arbeitspunkt AP3 in Richtung zunehmender Ströme im.

In einer ersten Messart M1 zwischen den Arbeitspunkten AP1 wird eine konstante Spannung UHV zwischen Anode 3 und Kathode 4 derart eingestellt, dass das Zählrohr 1 als Proportionalzählrohr arbeitet. Die Messgröße wird für diesen Fall in Abhängigkeit von dem zwischen Anode 3 und Kathode 4 fließenden Strom im ermittelt.

In einer zweiten Messart M2 zwischen den Arbeitspunkten AP1 und AP2 wird der zwischen Anode 3 und Kathode 4 fließende Strom im auf einen Stromsollwert geregelt, wobei als Stellgröße der Stromregelung die Spannung UHV zwischen Anode 3 und Kathode 4 dient. Die Messgröße wird für diesen Fall in Abhängigkeit von der Spannung UHV zwischen Anode 3 und Kathode 4 ermittelt.

In einer dritten Messart M3 beginnend mit dem Arbeitspunkt AP3 wird eine konstante Spannung UHV zwischen Anode 3 und Kathode 4 derart eingestellt, dass das Zählrohr 2 als Ionisationskammer arbeitet. Die Messgröße wird dann in Abhängigkeit von dem zwischen Anode 3 und Kathode 4 fließenden Strom im bestimmt.

Die erste Messart M1, die zweite Messart M2 bzw. die dritten Messart M3 wird in Abhängigkeit von dem zwischen Anode 3 und Kathode 4 fließenden Strom im bzw. in Abhängigkeit von der Spannung UHV zwischen Anode 3 und Kathode 4 ausgewählt.

Im Arbeitspunkt AP1 wird die Spannung UHV konstant gehalten und der Strom im gemessen. Sobald ein bestimmter, vorher festgelegter Strom im erreicht wird, wird dieser festgehalten und die Spannung UHV verringert, bis der Arbeitspunkt AP2 erreicht ist. Es wird dann auf den Arbeitspunkt AP3 umgeschaltet. Dieser liegt auf dem lonisationskammerplateau. Der lückenlose Anschluss des Messbereiches zwischen AP2 und AP3 kann durch geeignete Anpassung der elektronischen Verstärkung erreicht werden. Im Arbeitspunkt AP3 wird wieder die Spannung UHV festgehalten und der Strom im gemessen.

## Patentansprüche

1. Verfahren zum Betreiben eines radiometrischen Messgeräts (1),
- wobei das radiometrische Messgerät (1) ein Zählrohr (2) mit einer Anode (3) und einer Kathode (4) aufweist, und
- wobei das radiometrische Messgerät (1) dazu ausgebildet ist, abhängig von Eigenschaften von ionisierender Strahlung (5), die auf das Zählrohr (2) trifft, eine Messgröße zu bestimmen,
wobei das Verfahren die Schritte aufweist,
- in einer ersten Messart (M1),
- Einstellen einer konstanten ersten Spannung (UHV) zwischen Anode (3) und Kathode (4) derart, dass das Zählrohr (1) als Proportionalzählrohr arbeitet, und
- Bestimmen der Messgröße in Abhängigkeit von einem zwischen Anode (3) und Kathode (4) fließenden Strom (im),
- in einer zweiten Messart (M2),
- Regeln des zwischen Anode (3) und Kathode (4) fließenden Stroms (im) auf einen Stromsollwert, wobei als Stellgröße der Stromregelung die Spannung (UHV) zwischen Anode (3) und Kathode (4) dient, und
- Bestimmen der Messgröße in Abhängigkeit von der Spannung (UHV) zwischen Anode (3) und Kathode (4), und
- in einer dritten Messart (M3),
- Einstellen einer konstanten zweiten Spannung (UHV) zwischen Anode (3) und Kathode (4) derart, dass das Zählrohr (2) als Ionisationskammer arbeitet, und
- Bestimmen der Messgröße in Abhängigkeit von dem zwischen Anode (3) und Kathode (4) fließenden Strom (im), und
- Aktivieren entweder der ersten Messart (M1), der zweiten Messart (M2) oder der dritten Messart (M3) in Abhängigkeit von dem zwischen Anode (3) und Kathode (4) fließenden Strom (im) und/oder in Abhängigkeit von der Spannung (UHV) zwischen Anode (3) und Kathode (4).

2. Verfahren nach Anspruch 1, **dadurch gekennzeichnet, dass**
- dass das Zählrohr (2) in der zweiten Messart (M2) als Proportionalzählrohr arbeitet.

3. Verfahren nach einem der vorhergehenden Ansprüche, **dadurch gekennzeichnet, dass**
- ausgehend von der aktivierten ersten Messart (M1) die zweite Messart (M2) aktiviert wird, sobald der zwischen Anode (3) und Kathode (4) fließende Strom (im) einen Stromschwellenwert überschreitet.

4. Verfahren nach Anspruch 3, **dadurch gekennzeichnet, dass**
- der Stromsollwert basierend auf dem Stromschwellenwert gewählt wird, insbesondere der Stromsollwert und der Stromschwellenwert identisch gewählt werden.

5. Verfahren nach einem der vorhergehenden Ansprüche, **dadurch gekennzeichnet, dass**
- ausgehend von der aktivierten zweiten Messart (M2) die dritte Messart (M3) aktiviert wird, sobald die Spannung (UHV) zwischen Anode (3) und Kathode (4) einen Spannungsschwellenwert unterschreitet.

6. Verfahren nach einem der vorhergehenden Ansprüche, **dadurch gekennzeichnet, dass**
- die Messgröße eine Dosisleistung ist.

7. Radiometrisches Messgerät (1), aufweisend:
- ein Zählrohr (2) mit einer Anode (3) und einer Kathode (4),
- eine ansteuerbare Spannungserzeugungseinheit (6), die dazu ausgebildet ist, eine einstellbare Spannung (UHV) zwischen Anode (3) und Kathode (4) zu erzeugen, und
- eine Steuereinheit (7), die dazu ausgebildet ist, die Spannungserzeugungseinheit (6) anzusteuern und einen zwischen Anode (3) und Kathode (4) fließenden Strom (im) zu erfassen,
**dadurch gekennzeichnet, dass**
- die Steuereinheit (7) dazu ausgebildet ist, das radiometrische Messgerät (1) derart anzusteuern, dass ein Verfahren nach einem der vorhergehenden Ansprüche ausgeführt wird.
